Europäisches Patentamt

European Patent Office

Office européen des brevets

(19)

(11) Veröffentlichungsnummer: **0 114 605**
**B1**

(12) # EUROPÄISCHE PATENTSCHRIFT

(45) Veröffentlichungstag der Patentschrift:
**29.10.86**

(21) Anmeldenummer: **84100136.5**

(22) Anmeldetag: **09.01.84**

(51) Int. Cl.⁴: **C 08 L  69/00,** C 08 L  67/02 //
(C08L69/00, 67:02, 33:08,
51:04),(C08L67/02, 69:00, 33:08,
51:04)

(54) **Thermoplastische Formmassen.**

(30) Priorität: **22.01.83  DE 3302124**

(43) Veröffentlichungstag der Anmeldung:
**01.08.84 Patentblatt 84/31**

(45) Bekanntmachung des Hinweises auf die Patenterteilung:
**29.10.86 Patentblatt 86/44**

(84) Benannte Vertragsstaaten:
**DE FR GB IT NL SE**

(56) Entgegenhaltungen:
**EP - A - 0 064 648**
**DE - A - 1 810 993**

(73) Patentinhaber: **BAYER AG, Konzernverwaltung RP**
**Patentabteilung, D-5090 Leverkusen 1 Bayerwerk (DE)**

(72) Erfinder: **Stix, Wolfgang, Dr., Doerperhofstrasse 15,**
**D-4150 Krefeld 11 (DE)**
Erfinder: **Nouverné, Werner, Dr., Scheiblerstrasse 95,**
**D-4150 Krefeld 1 (DE)**
Erfinder: **Buding, Hartmuth, Dr., Liebermannstrasse 1,**
**D-4047 Dormagen (DE)**

Anmerkung: Innerhalb von neun Monaten nach der Bekanntmachung des Hinweises auf die Erteilung des europäischen Patents im Europäischen Patentblatt kann jedermann beim Europäischen Patentamt gegen das erteilte europäische Patent Einspruch einlegen. Der Einspruch ist schriftlich einzureichen und zu begründen. Er gilt erst als eingelegt, wenn die Einspruchsgebühr entrichtet worden ist (Art. 99(1) Europäisches Patentübereinkommen).

## Beschreibung

Gegenstand der vorliegenden Erfindung sind thermoplastische Formmassen enthaltend

(A) thermoplastische, aromatische Polycarbonate mit Gewichtsmittelmolekulargewichten $\overline{M}_w$ zwischen 10 000 und 200 000 ($\overline{M}_w$ ermittelt mittels Lichtstreuung) und gegebenenfalls

(B) thermoplastische Polyalkylenterephthalate im Mengenverhältnis Polycarbonat zu Polyalkylenterephthalat zwischen 99:1 und 1:99 vorzugsweise zwischen 85:15 und 10:90, und gegebenenfalls zusätzlich

(C) kautschukelastische Pfropfpolymerisate in Mengen von 1 bis 30 Gew.-%, vorzugsweise von 5 bis 25 Gew.-%, bezogen auf die Gewichtssumme aus (A) und (B), dadurch gekennzeichnet, dass die Formmassen

(D) Terpolymerisate, die aus 85 bis 54 Gew.-% Acrylsäureester, 12 bis 34 Gew.-% Vinylester und 3 bis 12 Gew.-% ungesättigter Nitrile bestehen, eine Mooney-Viskosität von mindestens 40 ME (ML 1+4/100 °C gemäss DIN 53 523) haben und gelfrei sind (gemessen in Toluol), enthalten, wobei

die Gewichtsmenge an Terpolymerisat (D) bei Anwesenheit von (C) und (B) zwischen 0,5 und 7 Gew.-%, vorzugsweise zwischen 1 und 5 Gew.-%, bezogen auf die Gewichtssumme aus (A) + (B), beträgt, bei Abwesenheit von (C), aber Anwesenheit von (B) zwischen 1 und 30 Gew.-%, vorzugsweise zwischen 5 und 25 Gew.-%, bezogen auf die Gewichtssumme aus (A) + (B), beträgt und bei Abwesenheit von (B) und (C) zwischen 2 und 30 Gew.-%, vorzugsweise zwischen 5 und 20 Gew.-%, bezogen auf die Gewichtssumme aus (A) + (D), beträgt.

Die bevorzugte Zusammensetzung der Terpolymerisatkomponente (D) besteht aus 85 bis 60 Gew.-% Acrylsäureester, 12 bis 28 Gew.-% Vinylester und 3 bis 12 Gew.-% ungesättigtes Nitril.

Die Komponenten (A) bis (D)
Die Komponente (A)

Unter aromatischen Polycarbonaten (A) im Sinne dieser Erfindung werden die bekannten Homopolycarbonate, Copolycarbonate und Mischungen dieser Polycarbonate verstanden, denen z.B. mindestens eines der folgenden Diphenole zugrundeliegt:
Hydrochinon,
Resorcin,
Dihydroxydiphenyle,
Bis-(hydroxyphenyl)-alkane,
Bis-(hydroxyphenyl)-cycloalkane,
Bis-(hydroxyphenyl)-sulfide,
Bis-(hydroxyphenyl)-ether
Bis-(hydroxyphenyl)-ketone,
Bis-(hydroxyphenyl)-sulfoxide,
Bis-(hydroxyphenyl)-sulfone,
α, α'-Bis-(hydroxyphenyl)-diisopropylbenzole, sowie deren kernalkylierte und kernhalogenierte Derivate.

Diese und weitere geeignete Diphenole sind z.B. in den US-PS 3 028 365, 3 275 601, 3 148 172, 3 062 781, 2 991 273 und 2 999 846, in den DE-OS 1 570 703, 2 063 050, 2 063 052, 2 211 957, in der FR-PS 1 561 518 und in der Monographie von H. Schnell, «Chemistry and Physics of Polycarbonates», Interscience Publishers, New York 1964, beschrieben.

Bevorzugte Diphenole sind z.B.
4,4'-Dihydroxydiphenyl,
2,4-Bis-(4-hydroxyphenyl)-2-methylbutan,
α, α'-Bis-(4-hydroxyphenyl)-p-diisopropylbenzol,
2,2-Bis-(3-methyl-4-hydroxyphenyl)-propan und
2,2-Bis-(3-chlor-4-hydroxyphenyl)-propan.

Besonders bevorzugte Diphenole sind z.B.:
2,2-Bis-(4-hydroxyphenyl)-propan,
2,2-Bis-(3,5-dichlor-4-hydroxyphenyl)-propan,
2,2-Bis-(3,5-dibrom-4-hydroxyphenyl)-propan,
1,1-Bis-(4-hydroxyphenyl)-cyclohexan und
2,2-Bis-(3,5-dimethyl-4-hydroxyphenyl)-propan.

Die aromatischen Polycarbonate (A) können durch den Einbau geringer Mengen, vorzugsweise von 0,05 bis 2,0 Mol-% (bezogen auf eingesetzte Diphenole), drei- oder mehr als dreifunktioneller Verbindungen, beispielsweise solcher mit drei oder mehr als drei phenolischen Hydroxylgruppen, verzweigt sein.

Die aromatischen Polycarbonate (A) sollen in der Regel mittlere Molekulargewichte $\overline{M}_w$ von 10 000 bis 200 000, vorzugsweise von 20 000 bis 80 000 haben, ermittelt durch Lichtstreuung.

Den hochmolekularen Polycarbonaten mit $\overline{M}_w$ von 10 000 bis 200 000 können auch kleine Anteile niedermolekularer Polycarbonate, z.B. mit einem mittleren Polykondensationsgrad von 2 bis 20, zugemischt sein.

Zur Einstellung des Molekulargewichts $\overline{M}_w$ der Polycarbonate (A) werden in bekannter Weise Kettenabbrecher, wie beispielsweise Phenol, Halogenphenole oder Alkylphenole, in den berechneten Mengen eingesetzt.

Die Herstellung der erfindungsgemäss einzusetzenden Polycarbonate (A) erfolgt in bekannter Weise entweder nach dem Phasengrenzflächenverfahren oder nach dem Verfahren in homogener Lösung (Pyridinverfahren) oder gegebenenfalls nach dem Schmelzumesterungsverfahren.

Die Komponente (B)

Polyalkylenterephthalate (B) im Sinne der Erfindung sind Reaktionsprodukte aus aromatischen Dicarbonsäuren oder ihren reaktionsfähigen Derivaten (z.B. Dimethylestern) und aliphatischen, cycloaliphatischen oder araliphatischen Diolen und Mischungen dieser Reaktionsprodukte.

Bevorzugte Polyalkylenterephthalate (B) lassen sich aus Terephthalsäure (oder ihren reaktionsfähigen Derivaten, z.B. Dimethylterephthalat) und aliphatischen oder cycloaliphatischen Diolen mit 2–10 C-Atomen nach bekannten Methoden herstellen (Kunststoff-Handbuch, Bd.

VIII, S. 695 ff, Carl Hanser Verlag, München 1973).

Bevorzugte Polyalkylenterephthalate (B) enthalten mindestens 80, vorzugsweise mindestens 90 Mol-%, bezogen auf die Dicarbonsäurekomponente, Terephthalsäurereste und mindestens 80, vorzugsweise mindestens 90 Mol-%, bezogen auf die Diolkomponente, Ethylenglykol- und/oder Butandiol-1,4-Reste.

Die bevorzugten Polyalkylenterephthalate (B) können neben Terephthalsäureresten bis zu 20 Mol-% Reste anderer aromatischer oder cycloaliphatischer Dicarbonsäuren mit 8–14 C-Atomen oder aliphatischer Dicarbonsäuren mit 4–12 C-Atomen enthalten, wie z.B. Reste von Phthalsäure, Isophthalsäure, Naphthalin-2,6-dicarbonsäure, 4,4'-Diphenyldicarbonsäure, Bernsteinsäure, Adipinsäure, Sebacinsäure, Azelainsäure, Cyclohexandiessigsäure.

Die bevorzugten Polyalkylenterephthalate (B) können neben Ethandiol- bzw. Butandiol-1,4-resten bis zu 20 Mol-% anderer aliphatischer Diole mit 3–12 C-Atomen oder cycloaliphatischer Diole mit 6–21 C-Atomen enthalten, z.B. Reste von Propandiol-1,3, 2-Ethylpropandiol-1,3, Neopentylglykol, Pentandiol-1,5, Hexandiol-1,6, Cyclohexandimethanol-1,4, 3-Methylpentandiol-2,4, 2-Methylpentandiol-2,4, 2,2,4-Trimethylpentandiol-1,3 und -1,6, 2-Ethylhexandiol-1,3, 2,2-Diethylpropandiol-1,3, Hexandiol-2,5, 1,4-Di-($\beta$-hydroxyethoxy)-benzol, 2,2-Bis-(4-hydroxycyclohexan)-propan, 2,4-Dihydroxy-1,1,3,3-tetramethylcyclobutan, 2,2-Bis-(3-$\beta$-hydroxy-ethoxyphenyl)-propan und 2,2-Bis-(4-hydroxypropoxy- phenyl)- propan (DE-OS 24 07 674, 24 07 776, 27 15 932).

Die Polyalkylenterephthalate (B) können durch Einbau relativ kleiner Mengen 3- oder 4-wertiger Alkohole oder 3- oder 4-basischer Carbonsäuren, wie sie z.B. in der DE-OS 19 00 270 und der US-PS 3 692 744 beschrieben sind, verzweigt werden. Beispiele bevorzugter Verzweigungsmittel sind Trimesinsäure, Trimellithsäure, Trimethylolethan und -propan und Pentaerythrit.

Es ist ratsam, nicht mehr als 1 Mol-% des Verzweigungsmittels, bezogen auf die Säurekomponente, zu verwenden.

Besonders bevorzugt sind Polylakylenterephthalate (B), die allein aus Terephthalsäure oder deren reaktionsfähigen Derivaten (z.B. deren Dialkylestern) und Ethylenglykol und/oder Butandiol-1,4 hergestellt worden sind, und Mischungen dieser Polylakylenterephthalate.

Bevorzugte Polyalkylenterephthalate (B) sind auch Copolyester, die aus mindestens zwei der obengenannten Säurekomponenten und/oder aus mindestens zwei der obengenannten Alkoholkomponenten hergestellt sind; besonders bevorzugte Copolyester sind Poly- (ethylenglykol/butandiol-1,4)-terephthalate.

Die als Komponente (B) vorzugsweise verwendeten Polyalkylenterephthalate besitzen im allgemeinen eine Intrinsic-Viskosität (I.V.) von 0,4 bis 1,5 dl/g, vorzugsweise 0,5–1,3 dl/g, insbesondere 0,6–1,2 dl/g, jeweils gemessen in Phenol/o-Dichlorbenzol (1:1 Gew.-Tl.) bei 25 °C.

Die Komponente (C)

Erfindungsgemäss einsetzbare kautschukelastische Pfropfpolymerisate (C) umfassen Pfropfcopolymerisate, vorzugsweise mit Glasübergangstemperaturen unter −20 °C, die im wesentlichen aus mindestens zwei der folgenden Monomeren erhältlich sind: Chloropren, Butadien, Isopren, Isobuten, Styrol, Acrylnitril, Ethylen, Propylen, Vinylacetat und (Meth-)Acrylsäureester mit 1–18 C-Atomen in der Alkoholkomponente; also Pfropfpolymerisate, wie sie z.B. in «Methoden der Organischen Chemie», (Houben-Weyl), Bd. 14/1, Georg Thieme Verlag, Stuttgart 1961, S. 393–406, und in C.B. Bucknall, «Toughened Plastics», Appl. Science Publishers, London 1977, beschrieben sind. Bevorzugte Pfropfpolymerisate (C) besitzen einen Gelgehalt von über 20 Gew.-%, vorzugsweise über 40 Gew.-%.

Bevorzugte Pfropfpolymerisate (C) sind z.B. mit Styrol und/oder Acrylnitril und/oder (Meth)-Acrylsäurealkylestern gepfropfte Polybutadiene, Butadien/Styrol-Copolymerisate und Poly-(meth)acrylsäureester, z.B. auch Copolymerisate aus Styrol oder Alkylstyrol und konjugierten Dienen (schlagfestes Polystyrol), d.h. Copolymerisate der in der DE-OS 16 94 173 (= US-PS 3 564 077) beschriebenen Art; bevorzugte Pfropfpolymerisate (C) sind z.B. auch mit Acryl- oder Methacrylsäureestern oder mit Vinylacetat oder mit Acrylnitril oder mit Styrol oder mit Alkylstyrolen gepfropfte Polybutadiene, Butadien/Styrol-Copolymerisate, Butadien/Acrylnitril-Copolymerisate, Polyisobutene oder Polyisoprene, wie sie z.B. in der DE-OS 23 48 377 (= US-PS 3 919 353) beschrieben sind.

Besonders bevorzugte Pfropfpolymerisate (C) sind z.B. ABS-Polymerisate, wie sie z.B. in der DE-OS 20 35 390 (= US-PS 3 644 574) oder in der DE-OS 22 48 242 (= GB-PS 1 409 275) beschrieben sind.

Besonders bevorzugte Pfropfpolymerisate (C) sind z.B. Pfropfpolymerisate, die durch Pfropfreaktion von

I. 10–40, vorzugsweise 10–35, insbesondere 15–25 Gew.-%, bezogen auf Pfropfprodukt, mindestens eines (Meth)-Acrylsäureesters und/oder eines Gemisches aus

10–35, vorzugsweise 20–35 Gew.-%, bezogen auf Gemisch, Acrylnitril und

65–90, vorzugsweise 65–80 Gew.-%, bezogen auf Gemisch, Styrol auf

II. 60–90, vorzugsweise 65–90, insbesondere 75–85 Gew.-%, bezogen auf Pfropfprodukt, eines Butadien-Polymerisats mit mindestens 70 Gew.-%, bezogen auf II, Butadienresten als Pfropfgrundlage erhältlich sind,

wobei vorzugsweise der Gelanteil der Pfropfgrundlage II $\geqslant$ 70% (in Toluol gemessen), der Pfropfgrad G 0,15 bis 0,55 und der mittlere Teilchendurchmesser $d_{50}$ des Pfropfpolymerisats (C) 0,2 bis 0,6, vorzugsweise 0,3 bis 0,5 µm betragen.

(Meth)Acrylsäureester I sind Ester der Acryl-

säure bzw. Methacrylsäure und einwertiger Alkohole mit 1 bis 8 C-Atomen.

Die Pfropfgrundlage II kann neben Butadienresten bis zu 30 Gew.-%, bezogen auf II, Reste anderer ethylenisch ungesättigter Monomerer, wie z.B. Styrol, Acrylnitril, Ester der Acryl- oder Methacrylsäure mit 1–4 C-Atomen in der Alkoholkomponente (wie Methylacrylat, Ethylacrylat, Methylmethacrylat, Ethylmethacrylat), enthalten. Die bevorzugte Pfropfgrundlage II besteht aus reinem Polybutadien.

Da bei der Pfropfreaktion die Pfropfmonomeren I bekanntlich nicht vollständig auf die Pfropfgrundlage II aufpfropfen, enthalten die erfindungsgemäss einzusetzenden Pfropfpolymerisate (C) neben den eigentlichen gepfropften Polymeren auch Homo- und gegebenenfalls Copolymerisate der zur Pfropfung eingesetzten Pfropfmonomeren I.

Der Pfropfgrad G bezeichnet das Gewichtsverhältnis von aufgepfropften Pfropfmonomeren zur Pfropfgrundlage und ist dimensionslos.

Die mittlere Teilchengrösse $d_{50}$ ist der Durchmesser, oberhalb und unterhalb dessen jeweils 50 Gew.-% der Teilchen liegen. Er kann bestimmt werden mittels Ultrazentrifugen-Messungen (W. Scholtan, H. Lange, Kolloid. Z. und Z. Polymere 250 (1972), 782–796) oder mittels Elektronenmikroskopie und anschliessende Teilchenauszählung (G. Kämpf, H. Schuster, Angew. Makromolekulare Chemie 14, (1970), 111–129) oder mittels Lichtstreuungsmessungen.

Besonders bevorzugte Pfropfpolymerisate (C) sind z.B. auch Pfropfpolymerisate aus

(a) 25–98 Gew.-%, bezogen auf Pfropfpolymerisat (C), Acrylatkautschuk mit einer Glasübergangstemperatur unter −20 °C als Pfropfgrundlage und

(b) 2–75 Gew.-%, bezogen auf Pfropfpolymerisat (C), mindestens eines polymerisierbaren ethylenisch ungesättigten Monomeren, dessen bzw. deren in Abwesenheit von (a) entstandenem Homo- bzw. entstandenem Copolymerisate eine Glasübergangstemperatur über 25 °C hätten, als Pfropfmonomere.

Die Acrylatkautschuke (a) der Pfropfpolymerisate (C) sind vorzugsweise Polymerisate aus Acrylsäurealkylestern, gegebenenfalls mit bis zu 40 Gew.-% anderer polymerisierbarer ethylenisch ungesättigter Monomerer. Sofern die als Pfropfgrundlage (a) eingesetzten Acrylatkautschuke (wie auf Seite 13/14 beschrieben) ihrerseits bereits Pfropfprodukte mit einem Dienkautschukkern sind, wird zur Berechnung dieser Prozentangabe der Dienkautschukkern nicht mitgezählt. Zu den bevorzugten polymerisierbaren Acrylsäureestern gehören $C_1$–$C_8$-Alkylester, beispielsweise Methyl-, Ethyl-, Butyl-, Octyl- und 2-Ethylhexylester; Halogenalkylester, vorzugsweise Halogen-$C_1$–$C_8$-alkylester, wie Chlorethylacrylat und aromatische Ester wie Benzylacrylat und Phenethylacrylat. Sie können einzeln oder in Mischung eingesetzt werden.

Die Acrylkautschuke (a) können unvernetzt oder vernetzt, vorzugsweise partiell vernetzt, sein.

Zur Vernetzung können Monomere mit mehr als einer polymerisierbaren Doppelbindung copolymerisiert werden. Bevorzugte Beispiele für vernetzende Monomere sind Ester ungesättigter Monocarbonsäuren mit 3 bis 8 C-Atomen und ungesättigter einwertiger Alkohole mit 3–12 C-Atomen oder gesättigter Polyole mit 2–4 OH-Gruppen mit 2–20 C-Atomen, wie z.B. Ethylenglykoldimethacrylat oder Allylmethacrylat; ausserdem mehrfach ungesättigte heterocyclische Verbindungen, wie z.B. Trivinyl- und Triallylcyanurat und -isocyanurat, Tris-acryloyl-s-triazine, ausserdem polyfunktionelle Vinylverbindungen, wie Di- und Trivinylbenzole; aber auch Triallylphosphat und Diallylphthalat.

Bevorzugte vernetzende Monomere sind Allylmethacrylat, Ethylenglykoldimethacrylat, Diallylphthalat und heterocyclische Verbindungen, die mindestens 3 ethylenisch ungesättigte Gruppen aufweisen.

Besonders bevorzugte vernetzende Monomere sind die cyclischen Monomeren Triallylcyanurat, Triallylisocyanurat, Trivinylcyanurat, Triacryloylhexahydro-s-triazin, Triallylbenzole.

Die Menge der vernetzenden Monomeren beträgt vorzugsweise 0,02 bis 5 Gew.-%, insbesondere 0,05 bis 2 Gew.-%, bezogen auf Pfropfgrundlage (a).

Bei cyclischen vernetzenden Monomeren mit mindestens drei ethylenisch ungesättigten Gruppen ist es vorteilhaft, ihre Menge auf < 1 Gew.-% der Pfropfgrundlage (a) zu beschränken.

Bevorzugte «andere» polymerisierbare ethylenisch ungesättigte Monomere, die neben den Acrylsäureestern gegebenenfalls zur Herstellung der Pfropfgrundlage (a) dienen können, sind z.B. Acrylnitril, Styrol, α-Methylstyrol, Acrylamide, Vinyl-$C_1$–$C_6$-alkylether. Bevorzugte Acrylatkautschuke als Pfropfgrundlage (a) sind Emulsionspolymerisate, die einen Gelgehalt von $\geqslant$ 60 Gew.-% aufweisen,

Der Gelgehalt der Pfropfgrundlage (a) wird bei 25 °C in Dimethylformamid bestimmt (M. Hoffmann, H. Krömer, R. Kuhn, Polymeranalytik I und II, Georg Thieme Verlag, Stuttgart 1977).

Acrylatkautschuke als Pfropfgrundlage (a) können auch Produkte sein, die einen vernetzten Dienkautschuk aus einem oder mehreren konjugierten Dienen, wie Polybutadien, oder ein Copolymerisat eines konjugierten Diens mit einem ethylenisch ungesättigten Monomer, wie Styrol und/oder Acrylnitril, als Kern enthalten.

Der Anteil des Polydien-Kerns in der Pfropfgrundlage (a) kann 0,1 bis 80 Gew.-%, bevorzugt 10–50 Gew.-%, bezogen auf (a), betragen. Schale und Kern können unabhängig voneinander unvernetzt, teilvernetzt oder hochvernetzt sein.

Besonders bevorzugte Pfropfgrundlagen (a) für Pfropfpolymerisate (C) auf Basis von Polyacrylsäureestern seien nachfolgend zusammengefasst:

1. Acrylsäureesterpolymerisate und -copolymerisate ohne Dienkautschukkern und

2. Acrylsäureesterpolymerisate und -copolymerisate, die einen Dienkautschukkern enthalten.

Die Pfropfausbeute, d.h. der Quotient aus der Menge des aufgepfropften Monomeren (b) und der Menge des eingesetzten Pfropfmonomeren (b) beträgt in der Regel 20 bis 80 Gew.-%. Die Bestimmung kann, wie bei M. Hoffmann, H. Krömer, R. Kuhn, Polymeranalytik, Bd. 1, Georg Thieme Verlag, Stuttgart 1977, beschrieben, erfolgen.

Bevorzugte Pfropfmonomere (b) sind α-Methylstyrol, Styrol, Acrylnitril, Methylmethacrylat oder Mischungen dieser Monomeren. Bevorzugte Pfropfmonomermischungen sind solche aus Styrol und Acrylnitril im Gewichtsverhältnis 90:10 bis 50:50.

Solche Pfropfpolymerisate (C) auf Basis von Polyacrylsäureestern werden z.B. in der DE-AS 24 44 584 (= US-PS 4 022 748) und in der DE-OS 27 26 256 (= US-PS 4 096 202) beschrieben.

Besonders vorteilhafte Pfropfpolymerisate dieser Art erhält man, wenn man 2–20 Gew.-%, vorzugsweise 2–15 Gew.-%, bezogen auf (C), Monomer (b) auf 80–98, vorzugsweise 85–97 Gew.-%, bezogen auf (C), des vollständig gebrochenen und in Wasser aufgeschlämmten Latex von (a) in Abwesenheit von Suspendiermittel aufpropft. Das anfallende pulverförmige Pfropfpolymerisat kann anschliessend getrocknet und im gewünschten Verhältnis unter Einwirkung von Scherkräften mit den anderen Komponenten so homogenisiert werden, dass die mittlere Teilchengrösse $d_{50}$ von (C) in der erfindungsgemässen Mischung 0,05 bis 3 µm, vorzugsweise 0,1 bis 2 µm, insbesondere 0,2 bis 1 µm beträgt.

Der Begriff «in Abwesenheit von Suspendiermittel» bedeutet die Abwesenheit von Stoffen, die nach Art und Menge die Pfropfmonomeren (b) in der wässrigen Phase suspendieren könnten. Die Definition schliesst die Anwesenheit von Stoffen nicht aus, die z.B. bei der Herstellung einer gepfropften Pfropfgrundlage (a) suspendierend gewirkt haben; in derartigen Fällen muss das Koagulations- oder Fällungsmittel, das zum Brechen des Latex (a) eingesetzt wird, in einer Menge zugesetzt werden, die die suspendierende Wirkung der in der Vorstufe eingesetzten Stoffe kompensiert; mit anderen Worten:

Es muss darauf geachtet werden, dass die Pfropfmonomeren (b) in der wässrigen Phase keine (stabile) Emulsion ergeben.

Ein derart in Abwesenheit von Suspendiermittel hergestelltes Pfropfpolymerisat (C) ist als Bestandteil der erfindungsgemässen Formmassen in den anderen Harzkomponenten zu einer aussergewöhnlich niedrigen Teilchengrösse verteilbar, die relativ unverändert auch längere Verarbeitungszeiten bei höherer Temperatur übersteht.

Der Begriff «aussergewöhnlich niedrige Teilchengrösse» meint, dass Anzahl, Form und Grösse der einzusetzenden Pfropfpolymerisatteilchen mit Anzahl, Form und Grösse der in die geschmolzenen anderen Harzkomponenten eingebrachten Pfropfpolymerisatteilchen auch nach dem Homogenisieren im wesentlichen noch übereinstimmen.

Als Pfropfgrundlage (a) können auch solche Acrylatkautschuke verwendet werden, die als wässrige Emulsion (Latex) anfallen und deren Latexpartikel 1–20 Gew.-%, vorzugsweise 1–10 Gew.-%, bezogen auf (a), bereits in wässriger Emulsion aufgepfropfte Monomere enthalten, deren Homo- bzw. Copolymerisate Glasübergangstemperaturen > 0 °C aufweisen würden.

Bevorzugte derartige aufgepfropfte Monomere sind Alkylacrylate, Alkylmethacrylate, Styrol, Acrylnitril, α-Methylstyrol und/oder Vinylacetat.

Derartige Pfropfgrundlagen (a) werden z.B. durch Emulsionspolymerisation oder Emulsionspfropfpolymerisation hergestellt. Man kann sie aber auch so herstellen, dass man einen Acrylatkautschuk in Lösung oder Masse herstellt, dann die Pfropfmonomeren aufpfropft und anschliessend diese Kautschuke in eine wässrige Emulsion, die sich für weitere Pfropfverfahren eignet, überführt.

Als Pfropfgrundlagen (a) für Acrylatkautschuke dieser besonderen Ausführungsform eignen sich also vorzugsweise neben den auf Seite 13/14 aufgezählten Polymerisaten auch in wässriger Emulsion hergestellte Pfropfpolymerisate aus Acrylsäureesterpolymerisaten oder -copolymerisaten, die gegebenenfalls einen Dienkautschukkern enthalten, und ethylenisch ungesättigten polymerisierbaren Monomeren.

Die Komponente (D)

Die erfindungsgemäss einzusetzenden Terpolymerisate (D) bestehen aus

85 bis 54 Gew.-% Acrylsäureestern,
12 bis 34 Gew.-% Vinylester und
3 bis 12 Gew.-% ungesättigter Nitrile.

Bevorzugte Mengenbereiche sind

85 bis 60 Gew.-% Acrylsäureester,
12 bis 28 Gew.-% Vinylester und
3 bis 12 Gew.-% ungesättigte Nitrile.

Die erfindungsgemäss einzusetzenden Terpolymerisate (D) haben eine Mooney-Viskosität von mindestens 40 ME (ML 1 +4/100 °C gemäss DIN 53 523) und sind gelfrei (gemessen in Toluol).

Sie sind in dem europäischen Patent 9731 bzw. in der deutschen Offenlegungsschrift 28 43 041 (Le A 19 019) beschrieben.

Ihre Herstellung erfolgt gemäss diesen Lit.-Stellen indem man 75 bis 40 Gew.-Teile eines Acrylsäureesters, 20 bis 55 Gew.-Teile eines Vinylesters und 3 bis 9 Gew.-Teile eines ungesättigten Nitrils in wässriger Suspension oder Emulsion in Gegenwart eines monomer- oder wasserlöslichen Polymerisationsinitiators bei Temperaturen von 0 bis 60 °C, vorzugsweise von 10 bis 50 °C bis zu einem Umsatz von 90%, vorzugsweise 80% polymerisiert.

Zur Herstellung der Terpolymerisate (D) bevorzugte Zusammensetzung geht man von 75 bis 45 Gew.-Teilen Acrylester, 20 bis 48 Gew.-Teilen Vinylester und 3 bis 9 Gew.-Teilen ungesättigten Nitrils aus.

Die erfindungsgemäss einzusetzenden Terpolymerisate (D) sind nicht vulkanisiert, d.h. nicht vernetzt.

Als Acrylsäureester seien beispielsweise genannt: Acrylsäureester mit 2–8 C-Atomen in der Alkoholkomponente wie Acrylsäureethyl-, -propyl-, -butyl-, -hexyl-, -2-ethyl- -2-ethylhexylester, bevorzugt Acrylsäurebutylester.

Als ungesättigte Nitrile seien beispielsweise genannt: Acrylnitrile, die durch eine Methylgruppe oder ein Chloratom substituiert sein können, wie Methacrylnitril, Acrylnitril, 2-Chloracrylnitril, bevorzugt Acrylnitril.

Die Polymerisate D haben eine Mooney-Viskosität von mindestens 40 ME (ML 1+4/100 °C gemäss DIN 53 523). Sie können nach einem im europäischen Patent 000 9731 dargelegten Verfahren hergestellt werden.

Zum Stand der Technik

Die Komponenten (A) bis (D) sind als solche bekannt.

Mischungen aus Polycarbonaten und Polyestern sind auch bekannt (siehe beispielsweise DE-PS 1 187 793 und DE-AS 1 694 124 (Le A 10 435) ).

Mischungen aus Polyestern und gepfropften Polymerisaten sind ebenfalls bekannt (siehe beispielsweise US-PS'en 3 919 353, 3 564 077, DE-OS 2 659 338 oder US-PS 4 096 202 bzw. DE-OS 2 726 256).

Mischungen aus Polycarbonaten und Polymerisaten sind ebenfalls bekannt (siehe beispielsweise Japanische Patentpublikation Nr. 18611/68 (Teijin, Priorität 30.6.1965), US-PS 3 663 471 (Le A 11 969), US-PS 3 437 631 (Mo 936), US-PS 4 299 928 (Mo 2062) oder DE-OS 3 114 494).

Mischungen aus Polycarbonaten, Polyestern und gepfropften Polymerisaten sind ebenfalls bekannt (siehe beispielsweise US-PS 38 64 428 bzw. DE-AS 23 43 609 oder US-PS 42 64 487 bzw. EU-OS 25 920 oder DE-OS 31 18 526 bzw. EU-OS 64 648).

Formmassen der hier in Rede stehenden Art sind beispielsweise auch beschrieben in DE-AS 11 70 141 (= US-PS 31 30 177), GB 992 503 (US 31 62 695), DE-PS 15 69 448 (= GB 10 07 724), DE-OS 18 10 993, DE-AS 20 37 419 (= US-PS 36 55 824), DE-OS 22 64 269 (= US-PS 38 01 673), DE-OS 23 04 214 (= GB 13 63 402), DE-OS 23 29 585 (Le A 15 024), DE-OS 30 31 524 (= US-PS 42 60 693) und US-PS 42 57 937.

Die Modifizierung von Polycarbonat-Polyester-Gemischen durch den Zusatz von verschiedenen Polymerisaten führt zwar zu Polycarbonat-Polyester-Formmassen mit einer Vielzahl von guten Eigenschaften, jedoch ist eine verbesserte Beständigkeit gegen Witterungseinflüsse oder eine Verbesserung der kritischen Breite gegebenenfalls in Kombination mit einer «guten Festigkeit im Durchstossversuch» bei −40 °C (gemäss DIN 53 443) erstrebenswert, etwa für den Einsatz derartiger Formmassen im Aussenbereich von Kraftfahrzeugen oder in Formkörpern der verschiedensten Dimensionierung und Formgestaltung.

Polycarbonate weisen bekanntlich hohe Izod-Kerbschlagzähigkeitswerte auf (ASTM D-256). Diese Werte von etwa 8,54 J/cm (16 ft-1bs/in.) in Verbindung mit dem Brechen durch Verformungsbruch sind charakteristisch für Prüfkörper, die schmäler als etwa 3,2 mm (1/8″) sind. Breitere Prüfkörper, d.h. mit einer Breite von 6,35 mm (1/4″), reissen durch Sprödbruch bei etwa 1,33 J/cm (2,5 ft-1bs/in.).

Die Abhängigkeit der Kerbschlagzähigkeit von der Breite führt zu dem Begriff der «kritischen Breite», einem Werkstoffparameter, der als die Breite definiert wird, bei der in der graphischen Darstellung der Kerbschlagzähigkeit in Abhängigkeit von der Probenbreite eine Unterbrechung auftritt. Die Kerbschlagzähigkeit wird nach ASTM D 256 gemessen.

Unter der Breite der Probe soll die Kantenlänge des Prüfstabes verstanden werden, die parallel zur Kerbe verläuft. Damit ist die Breite der Probe gleichzeitig die Länge der Kerbe.

Beispielsweise zeigt Polycarbonat auf Basis von Bisphenol A mit einer Schmelzflussrate von 3–6 g/10 min bei 300 °C (ASTM D-1238) eine Unterbrechung bei etwa 5,71 mm. Formteile aus diesem Material, die schmäler sind als 5,71 mm, brechen beim Aufschlag durch Verformungsbruch, während dickere Formteile durch Sprödbruch brechen.

Die Abhängigkeit der Kerbschlagzähigkeit von der Breite stellt einen Nachteil dar, weil sie die Eignung der Formmassen dadurch zu begrenzen pflegt, dass sie der Dimensionierung und Formgestaltung von Formteilen Begrenzungen auferlegt.

Die bisher bekannten Lösungen zur Verbesserung der kritischen Breite von Polycarbonaten, beispielsweise der Zusatz von Polyolefinen (US-Patent 34 37 631), der Zusatz von ABS (US-Patent 36 63 471) oder der Einbau von Thiodiphenolen (DE-OS 27 21 595 (Mo 1607) bzw. Can-PS 10 94 738 (Mo 1607-Can) ) sind nicht völlig befriedigend, insbesondere liefern die Zweiermischungen mit Polyolefinen bzw. mit ABS bei der weiteren Abmischung mit Polyalkylenterephthalaten noch keine optimalen Eigenschaftskombinationen für spezielle Anwendungen etwa im Bereich von Kraftfahrzeugen.

Bei Abmischungen von Polycarbonaten und Polyalkylenterephthalaten, die durch den Zusatz von Pfropfpolymerisaten modifiziert sind, erhöht der erfindungsgemässe zusätzliche Zusatz des Terpolymerisat die kritische Breite, ohne das Verhalten beim Durchstossversuch oder die Wärmeformbeständigkeit zu stark negativ zu beeinflussen.

Die erfindungsgemässen Formmassen bestehend aus Polycarbonaten, Polyalkylenterephthalaten und den erfindungsgemässen Terpolymerisaten sind einerseits vergleichbaren Dreiermischungen aus Polycarbonaten, Polyalkylenterephthalaten und Pfropfpolymerisaten auf Polybutadienbasis bezüglich Versprödung und Vergilbung überlegen, welche bei Aussenbewitterung in Betracht zu ziehen ist, und andererseits vergleichbaren Dreiermischungen aus Polycarbonaten, Polyalkylenterephthalaten und Polyacrylaten hinsichtlich Rissbildung und Vergrauung der Oberfläche überlegen. Diese treten bei den Polyacrylathaltigen Dreiermischungen schon bei kurzzeitigem Kontakt mit insbesondere methanolhaltigem Benzin auf, was vor allem bei pigmentierten Formmassen wegen der damit verbundenen Farbverschiebung besonders nachteilig ist.

Derartige Nachteile verhindern den Einsatz von aus diesen Formmassen hergestellten Formteilen z.B. im Aussenbereich von Kraftfahrzeugen, wo eine grosse Belastung durch Witterungseinflüsse auftritt und der Kontakt mit Kraftstoffen nicht ausgeschlossen werden kann.

Die erfindungsgemässen Dreiermischungen aus Polycarbonaten, Polyalkylenterephthalaten und Terpolymerisaten besitzen somit gute Schlagzähigkeit in Kombination mit Beständigkeit gegen Witterungseinflüsse und Oberflächenresistenz gegen Benzin und andere Arten von Kraftstoffen.

Technische Brauchbarkeit

a) Die erfindungsgemässen Formmassen aus Polycarbonaten und Terpolymerisaten können in üblicher Weise zu Formkörpern bei Temperaturen von 260 °C bis 310 °C auf üblichen Polycarbonatverarbeitungsmaschinen verarbeitet werden und überall dort eingesetzt werden, wo bislang die bekannten Polycarbonate ohne oder mit Schlagzähmodifikator eingesetzt werden. Sie können noch übliche Zusätze wie Verarbeitungshilfsmittel, Füll- oder Verstärkungsmaterialien, Stabilisatoren oder Flammschutzmittel enthalten.

b) Die erfindungsgemässen Formmassen aus Polycarbonaten, Polyalkylenterephthalaten und Terpolymerisaten können übliche Zusätze wie Gleit- und Entformungsmittel, Nukleiermittel, Stabilisatoren, Füll- und Verstärkungsstoffe, Flammschutzmittel sowie Farbstoffe enthalten.

Die erfindungsgemässen Formmassen aus Polycarbonaten, Polyalkylenterephthalaten und Terpolymerisaten können bis zu 60 Gew.-%, bezogen auf Gesamtgewicht der verstärkten Formmasse, übliche Füll- und/oder Verstärkungsstoffe enthalten. Bevorzugte Verstärkungsstoffe sind Glasfasern. Bevorzugte Füllstoffe, die auch verstärkend wirken können, sind Glaskugeln, Glimmer, Silikate, Quarz, Talkum, Titandioxid, Wollastonit.

Flammgeschützte Varianten dieser Dreierkomponentenformmassen enthalten Flammschutzmittel in einer Konzentration von im allgemeinen weniger als 30 Gew.-%, bezogen auf Gesamtgewicht der flammgeschützten Formmassen.

Es kommen die für Polycarbonate bzw. Polyester bekannten Flammschutzmittel in Frage, wie z.B. Polyhalogendiphenyl, Polyhalogendiphenylether, Polyhalogenphthalsäure und ihre Derivate und Polyhalogenoligo- und -polycarbonate, wobei die entsprechenden Bromverbindungen besonders wirksam sind. Ausserdem enthalten sie in der Regel einen Synergisten, wie z.B. Antimontrioxid.

Die erfindungsgemässen Formmassen können bei Massetemperaturen von 260 bis 280 °C und bei Formtemperaturen von 60 bis 70 °C verspritzt werden.

Ihre technische Verwendung erfolgt beispielsweise im Aussenbereich von Kraftfahrzeugen beispielsweise als Stossfänger oder Prallschürzen.

c) Die erfindungsgemässen Formmassen aus Polycarbonaten, Polyalkylenterephthalaten, Pfropfpolymerisaten und Terpolymerisaten eignen sich beispielsweise gut zur Herstellung von Scheinwerferreflektoren, Ventilatorpropellern oder Zahnrädern oder ähnlichen Formkörpern.

Sie können bei Massetemperaturen von 260 bis 280 °C und bei Formtemperaturen von 60 bis 70 °C verspritzt werden.

Die erfindungsgemässen Formmassen können übliche Zusätze, wie Gleit- und Entformungsmittel, Nukleiermittel, Stabilisatoren, Füll- und Verstärkungsstoffe, Flammschutzmittel sowie Farbstoffe enthalten.

Die Formmassen können bis zu 60 Gew.-%, bezogen auf Gesamtgewicht der verstärkten Formmasse, übliche Füll- und/oder Verstärkungsstoffe enthalten.

Bevorzugte Verstärkungsstoffe sind Glasfasern, Bevorzugte Füllstoffe, die auch verstärkend wirken können, sind Glaskugeln, Glimmer, Silikate, Quarz, Talkum, Titandioxid, Wollastonit.

Flammgeschützte Varianten dieser Vierkomponentenformmassen enthalten Flammschutzmittel in einer Konzentration von im allgemeinen weniger als 30 Gew.-%, bezogen auf Gesamtgewicht der flammgeschützten Formmassen.

Es kommen alle die für Polycarbonate bzw. Polyester bzw. Pfropfpolymerisate bekannten Flammschutzmittel in Frage, wie z.B. Polyhalogendiphenyle, Polyhalogendiphenylether, Polyhalogenphthalsäuren und ihre Derivate und Polyhalogenoligo- und -polycarbonate, wobei die entsprechenden Bromverbindungen besonders wirksam sind. Ausserdem enthalten sie in der Regel einen Synergisten, wie z.B. Antimontrioxid.

I. Beispiel 1

Polycarbonat auf der Basis von Bisphenol A mit einer relativen Lösungsviskosität von 1,29, gemessen in Methylenchlorid in einer Konzentration von 0,5 g/100 ml $CH_2Cl_2$ bei 25 °C und ein Terpolymeres, bestehend aus 77% Butylacrylat, 17% Vinylacetat und 6% Acrylnitril, mit einer Mooney-Viskosität von 40 ME (ML 1+4/100 °C, gemäss DIN 53 523) werden in Mengen gemäss der folgenden Tabelle bei 270 °C in einer geeigneten Maschine gemischt und das erhaltene Material bei 290 °C in einer Spritzgiessmaschine zu verschieden breiten Prüfstäben verarbeitet. An diesen Formkörpern wird entsprechend ASTM D 256 die Kerbschlagprüfung durchgeführt und die Breite bestimmt, oberhalb der die Kerbschlagzähigkeit drastisch kleiner ist.

|  | Gew.-% | Gew.-% | Gew.-% |
|---|---|---|---|
| Polycarbonat | 95 | 92,5 | 90 |
| Terpolymeres | 5 | 7,5 | 10 |

Kritische Breite

| bei Raumtemperatur | >8 mm | >8 mm | >8 mm |
|---|---|---|---|
| bei 0 °C |  4 mm | >8 mm | >8 mm |

Das verwendete Polycarbonat alleine hat eine kritische Breite von 4,8 mm bei Raumtemperatur.

II. Beispiel 1
(alle Teile – Angaben sind Gewichtsteile)

40 Tl. Polybutylenterephthalat mit einer Intrinsic-Viskosität (I.V.) von 1.16 dl/g (gemessen in Phenol/o-Dichlorbenzol (1:1 Gew.-Tl.) bei 25 °C), 52 Tl. Polycarbonat auf Basis Bisphenol A mit einer relativen Lösungsviskosität von 1,29 (gemessen in Methylenchlorid in einer Konzentration von 0,5 g/100 ml $CH_2Cl_2$ bei 25 °C), 7 Tl. eines Terpolymeren aus Beispiel I. 1, bestehend aus 77% Butylacrylat, 17% Vinylacetat und 6% Acrylnitril, und 1 Tl. eines bekannten Graupigmentes, bestehend aus einem $TiO_2$-Russ-Gemisch, so dass die Formmasse eine graue Farbe aufweist, werden in einer geeigneten Maschine bei 270 °C gemischt und granuliert.

Das Granulat wird in einer Spritzgussmaschine bei 270 °C Massetemperatur und 60 °C Formtemperatur zu Formkörpern entsprechend DIN 53 453 = ISO/R 179 (Normkleinstäbe und Flachstäbe) verarbeitet.

Die Normkleinstäbe werden in Anlehnung an den DIN-Entwurf 53 449, Teil 3, so über eine Metallschablone gespannt, dass sie eine Randfaserdehnung von 0,6% haben. Jeweils 2 Proben werden jeweils 5 min in zwei unterschiedliche Flüssigkeiten, die als Kraftstoffsimulanz dienen, getaucht:

Kraftstoff a besteht aus 50% Isooctan und 50% Toluol

Kraftstoff b besteht aus 42,5% Isooctan, 42,5% Toluol und 15% Methanol

An diesen Proben wird die Rissbildung beurteilt.

Zur Prüfung auf die Neigung zum Vergrauen werden jeweils zwei Normkleinstäbe ohne Spannungsbelastung 1 min in die Medien getaucht und anschliessend die Vergrauung beurteilt.

Ergebnis:

Die Proben weisen weder eine sichtbare Vergrauung noch sichtbare Risse auf.

Das Produkt hat eine Kerbschlagzähigkeit, gemessen nach ISO/R 179 von

56 kJ/m² bei Raumtemperatur und
8 kJ/m² bei −40 °C.

Die Wärmeformbeständigkeit (Vicat-Erweichungstemperatur VST Methode B), gemessen nach ISO 306 (DIN 53 460), beträgt 117 °C.

II. Beispiel 2
(Vergleichsbeispiel)

40 Tl. Polybutylenterephthalat (wie Beispiel II, 1), 52 Tl. Polycarbonat (wie Beispiel II, 1), 1 Tl. Pigment (wie Beispiel II, 1) sowie 5 Tl. eines Kautschukmodifikators und 2 Tl. eines Copolyethylens werden wie im Beispiel II, 1 gemischt, granuliert und zu Formkörpern verarbeitet.

Der Kautschukmodifikator besteht aus 79,2 Tl. n-Butylacrylat, das mit 0,4 Tl. 1,3-Butylendiacrylat vernetzt ist und in dem 0,4 Tl. Diallylmaleat als Pfropfmonomeres einpolymerisiert sind, als Pfropfgrundlage und 20 Tl. Polymethacrylat als Pfropfauflage.

Das Copolyethylen besteht aus 7% n-Butylacrylat, 4% Acrylsäure und 84% Ethylen.

Die Normkleinstäbe wurden wie in Beispiel 1 beschrieben auf ihr Verhalten gegenüber Kraftstoffsimulanz getestet.

Ergebnis:

| In Isooctan/Toluol: | Risse und wenig Vergrauung |
|---|---|
| In Isooctan/Toluol + Methanol: | keine Risse, aber starke Vergrauung |
| Kritische Breite: | 4,7 mm |

Die Kerbschlagzähigkeit, gemessen wie bei Beispiel 1 beträgt

57 kJ/m² bei Raumtemperatur und
7 kJ/m² bei −40 °C.

Von 10 Rundplatten verhalten sich 5 Proben beim Durchstossversuch bei −40 °C nach DIN 53 443 zäh, während die restlichen 5 Proben spröde brechen.

Die Wärmeformbeständigkeit (gemessen wie in Beispiel 1) beträgt 123 °C.

II. Beispiel 3
(Vergleichsbeispiel)

40 Tl. Polybutylenterephthalat (wie Beispiel II, 1) und 60 Tl. Polycarbonat (wie Beispiel II, 1) werden, wie im Beispiel II, 1 beschrieben, gemischt, zu Formkörpern verarbeitet und in Kraftstoffsimulanz getestet.

Ergebnis:

In beiden Medien treten Risse auf. Die Risse sind im methanolfreien Medium stärker ausgeprägt als im methanolhaltigen. Die Vergrauungsneigung kann bei diesen unpigmentierten Proben nicht beurteilt werden.

Die Kerbschlagzähigkeit beträgt bei Raumtemperatur 5 kJ/m², die Wärmeformbeständigkeit 105 °C.

III. Beispiel I

40 Gew.-Teile Polybutylenterephthalat mit einer Intrinsic-Viskosität (I.V.) von 1,16 dl/g (gemessen in Phenol/o-Dichlorbenzol (1:1 Gew.-Teile) bei 25 °C), 52 Gew.-Teilen Polycarbonat auf Basis Bisphenol A mit einer relativen Lösungsviskosität von 1,29 (gemessen in Methylenchlorid in einer Konzentration von 0,5 g/100 ml $CH_2Cl_2$ bei 25 °C), 1 Gew.-Teil eines bekannten Graupigments bestehend aus einem $TiO_2$-Russ-Gemisch, so dass die Formmasse eine graue Farbe aufweist, 2 Gew.-Teile eines Terpolymeren aus Beispiel I,1, bestehend aus 77% Butylacrylat, 17% Vinylacetat und 6% Acrylnitril und 5 Tl. eines Kautschukmodifikators, bestehend aus 79,2% n-Butylacrylat, das mit 0,4% 1,3-Butylendiacrylat vernetzt ist und in dem 0,4% Diallylmaleat als Pfropfmonomeres einpolymerisiert sind, als Pfropfgrundlage und 20% Polymethylmethacrylat als Pfropfauflage, werden in einer geeigneten Maschine bei 270 °C gemischt und granuliert.

Das Granulat wird in einer Spritzgussmaschine bei 270 °C Massetemperatur und 60 °C Formtemperatur zu verschieden breiten Prüfstäben verarbeitet. An diesen Formkörpern wird entsprechend ASTM D 256 die Kerbschlagprüfung durchgeführt und die Breite bestimmt, oberhalb der die Kerbschlagzähigkeit drastisch kleiner ist.

Nach dieser Methode ergibt sich bei der vorliegenden Mischung eine kritische Breite von 8 mm.

Alle 10 getesteten Rundplatten verhielten sich beim Durchstossversuch bei −40 °C nach DIN 53 443 zäh.

## Patentansprüche

1. Thermoplastische Formmassen enthaltend

(A) thermoplastische, aromatische Polycarbonate mit Gewichtsmittelmolekulargewichten $\overline{M}w$ zwischen 10 000 und 200 000 ($\overline{M}w$ ermittelt mittels Lichtstreuung) und gegebenenfalls

(B) thermoplastische Polyalkylenterephthalate im Mengenverhältnis Polycarbonat zu Polyalkylenterephthalat zwischen 99:1 und 1:99, und gegebenenfalls zusätzlich

(C) kautschukelastische Pfropfpolymerisate in Mengen von 1 bis 30 Gew.-%, bezogen auf die Gewichtssumme aus (A) und (B), dadurch gekennzeichnet, dass die Formmassen

(D) Terpolymerisate, die aus 85 bis 54 Gew.-% Acrylsäureester, 12 bis 34 Gew.-% Vinylester und 3 bis 12 Gew.-% ungesättigter Nitrile bestehen, eine Mooney-Viskosität von mindestens 40 ME (ML 1+4/100 °C gemäss DIN 53 523) haben und gelfrei sind (gemessen in Toluol), enthalten, wobei

die Gewichtsmenge an Terpolymerisat (D) bei Anwesenheit von (C) und (B) zwischen 0,5 und 7 Gew.-%, bezogen auf die Gewichtssumme aus (A) + (B), beträgt, bei Abwesenheit von (C), aber Anwesenheit von (B) zwischen 1 und 30 Gew.-%, bezogen auf die Gewichtssumme aus (A) + (B) beträgt, und bei Abwesenheit von (B) und (C) zwischen 2 und 30 Gew.-%, bezogen auf die Gewichtssumme aus (A) + (D) beträgt.

2. Thermoplastische Formmassen gemäss Anspruch 1, dadurch gekennzeichnet, dass die Terpolymerisatkomponente (D) aus 85 bis 60 Gew.-% Acrylsäureester, 12 bis 28 Gew.-% Vinylester und 3 bis 12 Gew.-% ungesättigter Nitrile besteht.

3. Thermoplastische Formmassen gemäss Ansprüche 1 und 2, dadurch gekennzeichnet, dass die Gewichtsmenge an Terpolymerisat (D) bei Anwesenheit von (C) und (B) zwischen 1 und 5 Gew.-%, bezogen auf die Gewichtssumme aus (A) + (B), beträgt, bei Abwesenheit von (C), aber Anwesenheit von (B) zwischen 5 und 25 Gew.-%, bezogen auf die Gewichtssumme aus (A) + (B), beträgt und bei Abwesenheit von (B) und (C) zwischen 5 und 20 Gew.-%, bezogen auf die Gewichtssumme aus (A) + (D), beträgt.

4. Thermoplastische Formmassen gemäss Ansprüche 1 und 2, dadurch gekennzeichnet, dass sie aus 2 bis 30 Gew.-% (D) und 98 bis 70 Gew.-% (A) bestehen.

5. Thermoplastische Formmassen gemäss Anspruch 4, dadurch gekennzeichnet, dass sie aus 5 bis 20 Gew.-% (D) und 95 bis 80 Gew.-% (A) bestehen.

6. Thermoplastische Formmassen gemäss Ansprüchen 1 und 2, dadurch gekennzeichnet, dass sie aus 1 bis 30 Gew.-% (D), bezogen auf die Gewichtssumme auf (A) + (B), und 100 Gew.-% (A) + (B) bestehen, wobei das Mengenverhältnis von (A) : (B) zwischen 99:1 und 1:99 liegt.

7. Thermoplastische Formmassen gemäss Anspruch 6, dadurch gekennzeichnet, dass sie aus 5 bis 25 Gew.-% (D), bezogen auf die Gewichtssumme aus (A) + (B), und 100 Gew.-% (A) + (B) bestehen, wobei das Mengenverhältnis von (A) : (B) zwischen 99:1 und 1:99 liegt.

8. Thermoplastische Formmassen gemäss Ansprüche 1 und 2, dadurch gekennzeichnet, dass sie aus 0,5 bis 7 Gew.-% (D), bezogen auf die Gewichtssumme aus (A) + (B), 1 bis 30 Gew.-% (C), bezogen auf die Gewichtssumme aus (A) + (B), und 100 Gew.-% (A) + (B) bestehen, wobei das Mengenverhältnis von (A) : (B) zwischen 99:1 und 1:99 liegt.

9. Thermoplastische Formmassen gemäss Anspruch 8, dadurch gekennzeichnet, dass sie aus 1 bis 5 Gew.-% (D), bezogen auf die Gewichtssumme aus (A) + (B), 1 bis 30 Gew.-% (C), bezogen auf die Gewichtssumme aus (A) + (B), und 100 Gew.-% (A) + (B) bestehen, wobei das Mengenverhältnis von (A) : (B) zwischen 99:1 und 1:99 liegt.

10. Thermoplastische Formmassen gemäss Ansprüche 1 bis 3, dadurch gekennzeichnet, dass sie aus den Polycarbonaten (A), den Terpolymerisaten (D), und üblichen Zusätzen, und gegebenenfalls den Polyalkylenterephthalaten (B) und gegebenenfalls zusätzlich den kautschukelastischen Pfropfpolymerisaten (C) bestehen.

## Revendications

1. Mélanges à mouler thermoplastiques contenant

(A) des polycarbonates aromatiques thermoplastiques ayant des moyennes en poids $\overline{M}_p$ des poids moléculaires comprises entre 10 000 et 200 000 ($\overline{M}_p$ déterminé par diffusion de la lumière) et le cas échéant

(B) des téréphtalates de polyalkylènes thermoplastiques dans le rapport quantitatif du polycarbonate au téréphtalate de polyalkylène de 99:1 à 1:99 et en outre, le cas échéant,

(C) des produits de polymérisation par greffage ayant l'élasticité du caoutchouc, en quantités de 1 à 30% en poids par rapport à la somme des poids de (A) et (B), caractérisés en ce les mélanges à mouler contiennent

(D) des terpolymères qui se composent de 85 à 54% en poids d'ester d'acide acrylique, 12 à 34% en poids d'ester de vinyle et 3 à 12% en poids de nitriles insaturés, qui ont une viscosité Mooney d'au moins 40 ME (ML 1+4/100 °C conformément à DIN 53 523) et qui sont dépourvus de gel (mesuré dans du toluène),

la quantité en poids de terpolymère (D) en présence de (C) et (B) s'élevant entre 0,5 et 7% en poids par rapport à la somme des poids de (A) + (B), s'élevant en l'absence de (C) mais en présence de (B) entre 1 et 30% en poids par rapport à la somme des poids de (A) + (B), et s'élevant en l'absence de (B) et (C) entre 2 et 30% en poids par rapport à la somme des poids de (A) + (D).

2. Matières à mouler thermoplastiques suivant la revendication 1, caractérisées en ce que le composant terpolymérique (D) est formé de 85 à 60% en poids d'ester d'acide acrylique, 12 à 28% en poids d'ester vinylique et 3 à 12% en poids de nitriles insaturés.

3. Mélanges à mouler thermoplastiques suivant les revendications 1 et 2, caractérisés en ce que la quantité en poids de terpolymère (D) s'élève, en présence de (C) et (B), entre 1 et 5% en poids par rapport à la somme des poids de (A) + (B), s'élève en l'absence de (C) mais en présence de (B) entre 5 et 25% en poids par rapport à la somme des poids de (A) + (B) et s'élève en l'absence de (B) et (C) entre 5 et 20% en poids par rapport à la somme des poids de (A) + (D).

4. Mélanges thermoplastiques à mouler suivant les revendications 1 et 2, caractérisés en ce qu'ils se composent de 2 à 30% en poids de (D) et 98 à 70% en poids de (A).

5. Mélanges thermoplastiques à mouler suivant la revendication 4, caractérisés en ce qu'ils se composent de 5 à 20% en poids de (D) et de 95 à 80% en poids de (A).

6. Mélanges thermoplastiques à mouler suivant les revendications 1 et 2, caractérisés en ce qu'ils se composent de 1 à 30% en poids de (D), par rapport à la somme des poids de (A) + (B), et de 100% en poids de (A) + (B), le rapport quantitatif (A) : (B) étant compris entre 99:1 et 1:99.

7. Mélanges thermoplastiques à mouler suivant la revendication 6, caractérisés en ce qu'ils se composent de 5 à 25% en poids de (D) par rapport à la somme des poids de (A) + (B), et de 100% en poids de (A) + (B), le rapport quantitatif (A) : (B) se situant entre 99:1 et 1:99.

8. Mélanges thermoplastiques à mouler suivant les revendications 1 et 2, caractérisés en ce qu'ils se composent de 0,5 à 7% en poids de (D) par rapport à la somme des poids de (A) + (B), 1 à 30% en poids de (C) par rapport à la somme des poids de (A) + (B) et 100% en poids de (A) + (B), le rapport quantitatif (A): (B) se situant entre 99:1 et 1:99.

9. Mélanges thermoplastiques à mouler suivant la revendication 8, caractérisés en ce qu'ils se composent de 1 à 5% en poids de (D) par rapport à la somme des poids de (A) + (B), 1 à 30% en poids de (C) par rapport à la somme des poids de (A) + (B) et 100% en poids de (A) + (B), le rapport quantitatif (A) : (B) étant situé entre 99:1 et 1:99.

10. Mélanges thermoplastiques à mouler suivant les revendications 1 à 3, caractérisés en ce qu'ils se composent des polycarbonates (A), des terpolymères (D) et d'additifs classiques, et le cas échéant, des téréphtalates de polyalkylènes (B) et en outre, éventuellement, des produits de polymérisation par greffage (C) ayant l'élasticité du caoutchouc.

**Claims**

1. Thermoplastic moulding compositions containing (A) thermoplastic aromatic polycarbonates with weight-average molecular weights $\overline{M}w$ between 10 000 and 200 000 ($\overline{M}w$ determined by means of light scattering) and, if appropriate, (B) thermoplastic polyalkylene terephthalates in a quantitative ratio of polycarbonate to polyalkylene terephthalate of between 99:1 and 1:99, and if appropriate additionally (C) elastomeric graft polymers in amounts of 1 to 30% by weight, based on the sum of the weights (A) and (B), characterised in that the moulding compositions contain (D) terpolymers which consist of 85 to 54% by weight of acrylates, 12 to 34% by weight of vinyl esters and 3 to 12% by weight of unsaturated nitriles, have a Mooney viscosity of at least 40 Mooney Units (ML 1+4/100 °C according to DIN 53 523) and are gel-free (measured in toluene), wherein the amount by weight of terpolymer (D) is, if (C) and (B) are present, between 0.5 and 7% by weight, based on the sum of the weights (A) + (B), or, if (C) is absent but (B) is present, between 1 and 30% by weight, based on the sum of the weights (A) + (B), or, if (B) and (C) are absent, between 2 and 30% by weight, based on the sum of the weights (A) + (D).

2. Thermoplastic moulding compositions according to Claim 1, characterised in that the terpolymer component (D) consists of 85 to 60% by weight of acrylate, 12 to 28% by weight of vinyl esters and 3 to 12% by weight of unsaturated nitriles.

3. Thermoplastic moulding compositions according to Claims 1 and 2, characterised in that the amount by weight of terpolymer (D) is, if (C) and (B) are present, between 1 and 5% by weight, based on the sum of the weights (A) + (B), or, if (C) is absent but (B) is present, between 5 and 25% by weight, based on the sum of the weights (A) + (B), or, if (B) and (C) are absent, between 5 and 20% by weight, based on the sum of the weights (A) + (D).

4. Thermoplastic moulding compositions according to Claims 1 and 2, characterised in that they consist of 2 to 30% by weight of (D) and 98 to 70% by weight of (A).

5. Thermoplastic moulding compositions according to Claim 4, characterised in that they consist of 5 to 20% by weight of (D) and 95 to 80% by weight of (A).

6. Thermoplastic moulding compositions according to Claims 1 and 2, characterised in that they consist of 1 to 30% by weight of (D), based on the sum of the weights (A) + (B), and 100% by weight of (A) + (B), the quantitative ratio of (A) : (B) being between 99:1 and 1:99.

7. Thermoplastic moulding compositions according to Claim 6, characterised in that they consist of 5 to 25% by weight of (D), based on the sum of the weights of (A) + (B), and 100% by weight of (A) + (B), the quantitative ratio of (A) : (B) being between 99:1 and 1:99.

8. Thermoplastic moulding compositions according to Claims 1 and 2, characterised in that they consist of 0.5 to 7% by weight of (D), based on the sum of the weights (A) + (B), 1 to 30% by weight of (C), based on the sum of the weights (A) + (B), and 100% by weight of (A) + (B), the quantitative ratio of (A) : (B) being between 99:1 and 1:99.

9. Thermoplastic moulding compositions according to Claim 8, characterised in that they consist of 1 to 5% by weight of (D), based on the sum of the weights of (A) + (B), 1 to 30% by weight of (C), based on the sum of the weights of (A) + (B), and 100% by weight of (A) + (B), the quantitative ratio of (A) : (B) being between 99:1 and 1:99.

10. Thermoplastic moulding compositions according to Claims 1 to 3, characterised in that they consist of the polycarbonates (A), the terpolymers (D), and customary additives, and, if appropriate, the polyalkylene terephthalates (B) and, if appropriate, also the elastomeric graft polymers (C).